# FASCICULE DE BREVET EUROPEEN

(11) **EP 1 502 500 B1**
(45) Date de publication et mention de la délivrance du brevet: **13.09.2006**
(21) Numéro de dépôt: 04291956.3
(22) Date de dépôt: 30.07.2004
(51) Int. Cl.: A01K 7/00

(54) **Abreuvoir basculant**
Schwenkbarer Trog
Pivotable drinking through

(30) Priorité: 01.08.2003 FR 0309513
(43) Date de publication de la demande: 02.02.2005
(73) Titulaire: La Buvette, 08090 Tournes (FR)
(72) Inventeur: Martin, Jean, 08000 Charleville Mézières (FR)
(74) Mandataire: Rhein, Alain

(56) Documents cités:
- WO-A-99/05905
- DE-U- 20 300 569
- GB-A- 2 268 868
- NL-C- 1 011 567

## Description

L'invention est relative à un abreuvoir basculant, du type comportant un bac ou une cuve déplaçable entre une position d'abreuvement et une position de nettoyage au moyen d'un levier de manoeuvre.

Des abreuvoirs basculants de type connu permettent une vidange rapide du bac ou de la cuve, grâce au basculement d'un quart de tour dudit bac ou de ladite cuve autour d'un axe de basculement horizontal.

Le levier de manoeuvre des abreuvoirs basculants de type connu est généralement orienté verticalement en position d'abreuvement et monté à coulissement vers le bas sous l'effet de son propre poids. Le coulissement vers le bas sous l'effet du poids du levier permet d'utiliser le levier de manoeuvre comme un axe de verrouillage coopérant avec un orifice correspondant de verrouillage ménagé sur le support du bac ou de la cuve.

Le poids et la longueur du levier sont relativement importants, ce qui rend la manoeuvre d'une amplitude forte pour l'opérateur. L'encombrement du levier de manoeuvre résultant de sa longueur importante empêche en pratique de basculer un abreuvoir adjacent à un mur vers la direction du mur. Un tel basculement vers l'arrière est cependant souhaitable pour protéger l'intérieur du bac ou de la cuve des impuretés, notamment au cours du paillage d'une stabulation.

Un premier but de l'invention est de faciliter la manoeuvre de l'opérateur, en diminuant la longueur et le poids du levier d'un abreuvoir basculant, ainsi que l'amplitude de mouvement.

Un deuxième but de l'invention est de fournir un abreuvoir basculant indexé en position non seulement dans la position d'abreuvement, mais également dans au moins une autre position, par exemple une position de nettoyage ou une position de protection.

Un troisième but de l'invention est de fournir un abreuvoir basculant pouvant être maintenu en position stable lors des opérations effectuées par l'opérateur, sans obliger l'opérateur à garder la main sur le levier de manoeuvre.

L'invention a pour objet un abreuvoir basculant, du type comportant un bac ou une cuve déplaçable entre une position d'abreuvement et une position de nettoyage au moyen d'un levier de manoeuvre, solidarisé audit bac ou à ladite cuve, caractérisé par le fait que ledit levier de manoeuvre coopère avec un moyen d'indexage transversal audit levier, pour indexer et maintenir en position ledit bac ou ladite cuve au moins dans ladite position d'abreuvement et dans la dite position de nettoyage.

Selon d'autres caractéristiques alternatives de l'invention :
- ledit moyen d'indexage transversal est apte à indexer et maintenir en position ledit bac ou ladite cuve dans au moins une troisième position distincte de ladite position d'abreuvement et de ladite position de nettoyage, une dite troisième position correspondant de préférence à une position de protection du bac ou de la cuve.
- ledit levier de manoeuvre est monté avec un degré de liberté sur un support de moyen d'indexage.
- ledit levier de manoeuvre peut être monté avec une liberté de rotation autour de son axe longitudinal.
- ledit levier de manoeuvre peut être monté avec liberté de rotation autour d'un axe transversal à sa direction longitudinale.
- le moyen d'indexage est un moyen à rappel élastique, de manière à indexer automatiquement le bac ou la cuve en position sur relâchement du levier de manoeuvre, dès que le moyen d'indexage se trouve en une position prédéterminée.
- le moyen d'indexage comporte un axe d'indexage précontraint par un ressort en position sortie.
- le levier de manoeuvre et le moyen d'indexage sont assemblés dans un boîtier d'indexage fixé audit bac ou à ladite cuve.
- ledit boîtier d'indexage est fixé radialement extérieurement à la robinetterie de manière à décrire un arc de cercle autour de la robinetterie lors du basculement du bac ou de la cuve, ladite robinetterie restant en position fixe solidaire d'un support immobile du bac ou de la cuve.
- l'abreuvoir est constitué de manière démontable par assemblage modulaire de pièces symétriques, en permettant une permutation à droite ou à gauche de ces pièces et de la robinetterie.

L'invention sera mieux comprise grâce à la description qui va suivre donnée à titre d'exemple non limitatif en référence aux dessins annexés dans lesquels :
La figure 1 représente schématiquement une vue en perspective d'un abreuvoir basculant selon l'invention en position d'abreuvement.
La figure 2 représente schématiquement une vue en perspective d'un abreuvoir basculant selon l'invention en position de nettoyage.
La figure 3 représente schématiquement une vue en perspective d'un abreuvoir basculant selon l'invention en position de protection.
La figure 4 représente schématiquement une vue en perspective partielle éclatée d'un abreuvoir basculant selon l'invention illustrant des éléments constitutifs de l'invention.
La figure 5 représente schématiquement une vue partielle assemblée à échelle agrandie, de l'abreuvoir basculant de la figure 1 avec une coupe dans le plan vertical longitudinal de symétrie.
La figure 6 représente schématiquement une vue en perspective éclatée de pièces symétriques ou identiques permettant un assemblage modulaire d'abreuvoirs basculants selon l'invention.

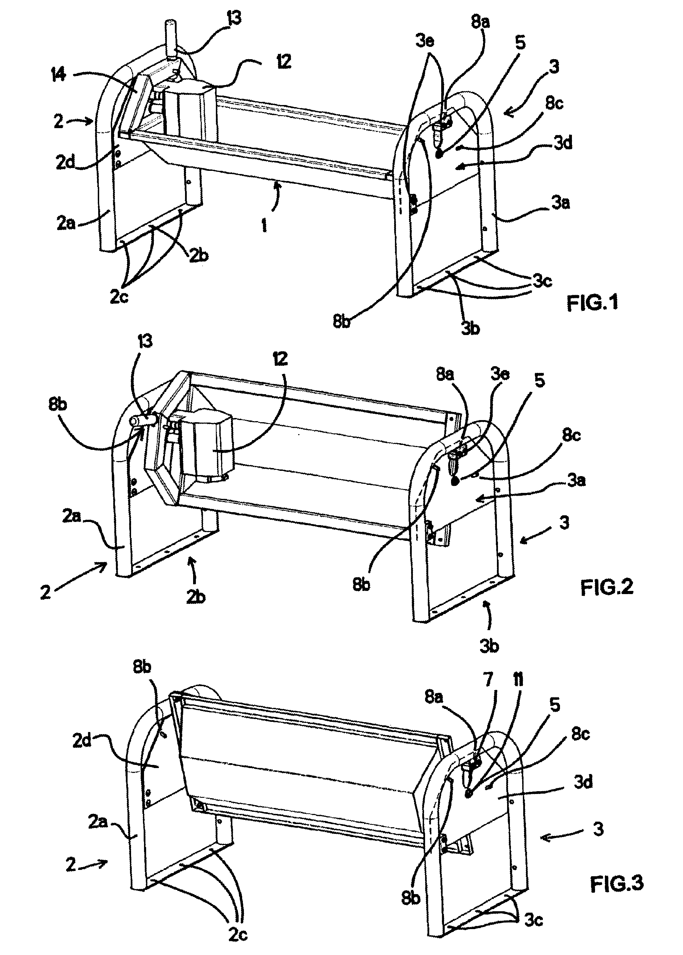

En référence aux figures 1 à 6, les éléments identiques ou fonctionnellement équivalents sont repérés par des chiffres de références identiques.

Sur la figure 1, un abreuvoir basculant selon l'invention est représenté en position d'abreuvement .

L'abreuvoir comporte un bac ou une cuve 1 généralement en matière inoxydable, monté dans deux supports 2 et 3 en forme de portique de manière pivotante sur des paliers.

Chaque support 2 ou 3 est avantageusement constitué par assemblage d'un cadre tubulaire avec un flanc vertical portant un palier de pivotement du bac 1.

Chaque cadre tubulaire de support 2 ou 3 est avantageusement formé d'une configuration tubulaire 2a ou 3a en U, fermée par une traverse plane inférieure 2b ou 3b munie d'orifices de fixation 2c ou 3c au sol ou sur une paroi verticale.

Chaque flanc 2d ou 3d est de préférence assemblé de manière démontable à des goussets 2e ou 3e solidaires de la configuration 2a ou 3a tubulaire en U.

Chaque flanc 2d ou 3d porte un palier 4 ou 5 dans lequel tourillonne un point d'axe 10 ou 11 solidaire du bac ou de la cuve 1.

Les deux flancs 2d et 3d sont de préférence identiques et comportent également une lumière verticale 6 ou 7 de passage d'une robinetterie 12 de type connu en soi et ne nécessitant pas de description plus détaillée.

Chaque flanc 2d ou 3d comporte également des lumières d'indexage 8a, 8b, 8c destinées à bloquer en rotation un axe commandé par un levier de manoeuvre 13.

Le levier de manoeuvre 13 et le moyen d'indexage transversal commandé par le levier de manoeuvre 13 sont montés sur un carter 14 de manoeuvre enveloppant la tubulure d'admission de la robinetterie 12, de manière à laisser la robinetterie en position fixe solidaire du support 2, lorsque l'abreuvoir basculant selon l'invention est manoeuvré pour passer de la position de la figure 1 à la position de la figure 2 ou de la figure 3.

Dans l'exemple représenté, le carter de manoeuvre 14 est formé de trois parties assemblées entre elles pour entourer les tubulures d'admissions de la robinetterie 12 : ainsi, dans le mouvement de basculement de l'abreuvoir, le carter 14 décrit un arc de cercle autour de la robinetterie 12, qui reste fixe en position et solidaire du support 2 dans le cas d'un montage à gauche, ou du support 3 dans le cas d'un montage à droite.

Sur la figure 1, en position d'abreuvement, le levier 13 est relâché et le moyen d'indexage est engagé dans la lumière 8a du flanc 2d.

Sur la figure 2, l'abreuvoir basculant selon l'invention est en position de vidange et de nettoyage et le moyen d'indexage apte à être commandé par le levier de manoeuvre 13 est engagé dans la lumière 8b du flanc 2d.

Sur la figure 3, l'abreuvoir basculant selon l'invention est en position de protection, par exemple tourné vers un mur, et le moyen d'indexage apte à être commandé par le levier 13 est engagé dans la lumière 8c du flanc 2d.

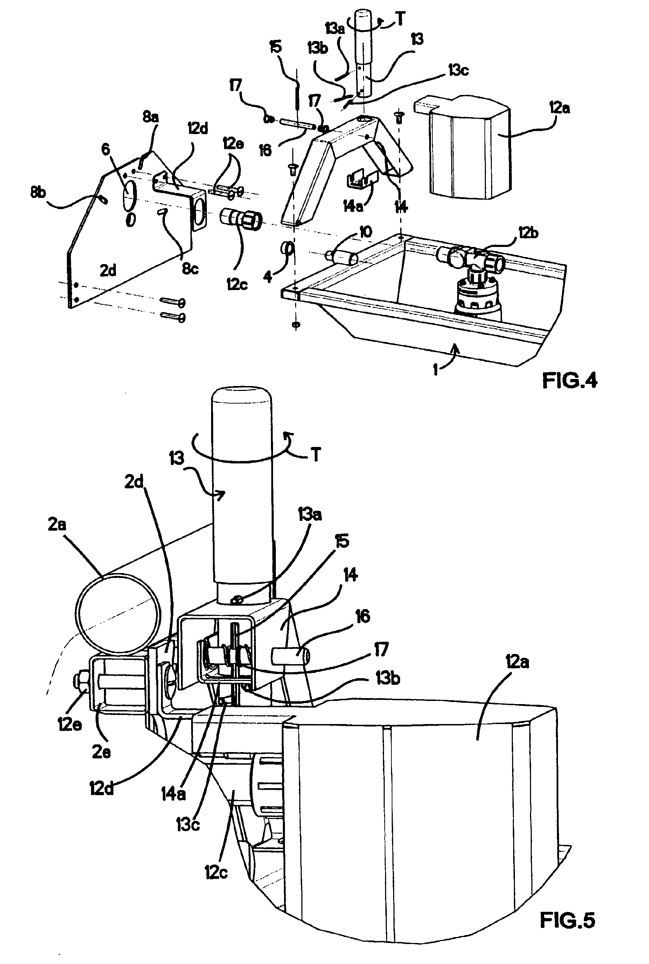

En référence à la figure 4, le levier 13 de manoeuvre de longueur réduite est constitué sous la forme d'une manette possédant un degré de liberté de rotation, par exemple autour de son axe longitudinal.

Le levier de manoeuvre 13 est monté prisonnier sur le carter 14 par une goupille supérieure 13a et une goupille inférieure 13b.

Le levier de manoeuvre 13 porte également un doigt 13c de manoeuvre destiné à coopérer avec un doigt ou une goupille 15 d'actionnement solidaire d'un axe 16 d'indexage.

L'axe 16 d'indexage est contraint en position d'indexage par au moins un ressort 17.

L'ensemble de robinetterie 12 comporte un carter 12a, une vanne à flotteur 12b, un raccord 12c et une patte de montage 12d au moyen de vis ou boulons 12e appropriés. De manière avantageuse, la patte 12d comporte une lumière verticale facilitant le réglage en hauteur de la robinetterie.

En position stable, l'axe 16 est constamment précontraint par le ressort 17 en position d'indexage et d'engagement à travers un orifice d'indexage 8a ou 8b ou 8c. Lorsque l'on souhaite débloquer l'abreuvoir basculant, on tourne le levier 13 dans le sens de la flèche T, de manière à provoquer un déplacement du doigt 13c agissant sur la goupille 15. Cette action provoque la translation de l'axe 16 à l'encontre du ressort 17 dans le sens correspondant au dégagement hors d'un orifice 8a ou 8b ou 8c.

Après avoir dégagé l'axe 16 d'indexage, il suffit de basculer le bac ou la cuve 1 au moyen du levier T : dès le début du basculement, on relâche le levier 13, et l'axe 16 d'indexage glisse sur la paroi du flanc 2d ou 3d au cours du basculement jusqu'à venir dans une nouvelle position stable où l'axe d'indexage 16 est poussé par le ressort 17 à travers l'orifice 8 d'indexage suivant.

L'invention permet ainsi d'obtenir au moins deux positions stables de l'abreuvoir basculant correspondant au moins à la position d'abreuvement et à une position de nettoyage ou de vidange.

La réduction de la dimension du levier par rapport à l'art antérieur permet d'obtenir un encombrement réduit et facilite également le pivotement du bac vers l'arrière (figure3).

En ayant prévu l'orifice d'indexage 8c correspondant, la position de protection du bac ou de la cuve (figure 3) reste également stable pendant les opérations de paillage ou de projection de particules susceptibles de polluer l'eau du bac ou de la cuve.

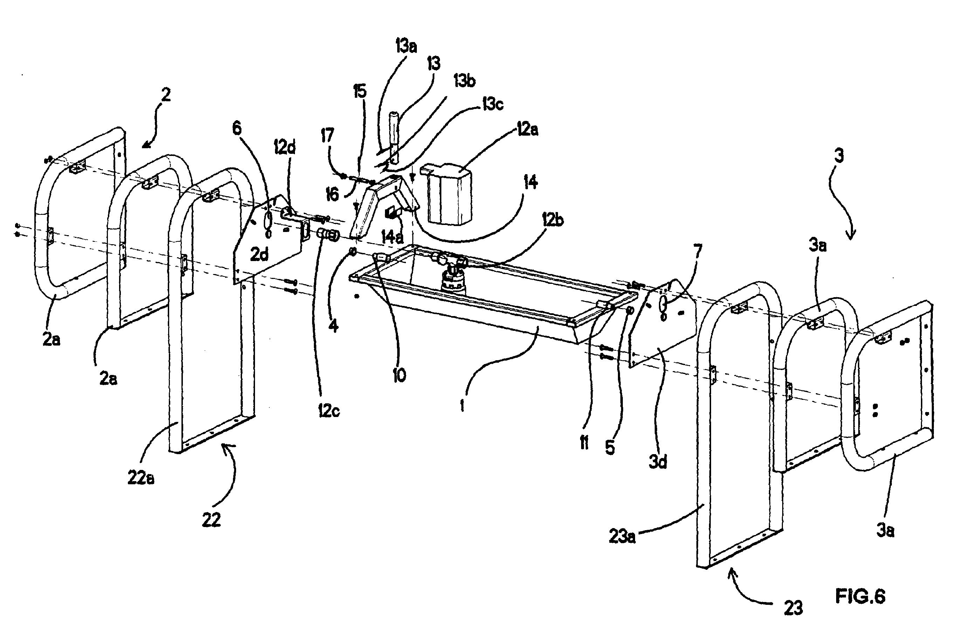

En référence à la figure 6, un mode préféré de réalisation de l'invention est constitué sous forme d'un ensemble de pièces symétriques permettant un assemblage modulaire à droite ou à gauche du bac ou de la cuve 1.

On peut prévoir au lieu des supports 2 et 3 de la figure 1 susceptibles d'être fixés au sol ou contre une paroi verticale, des supports 22 et 23 de taille plus importante permettant une fixation au sol dans une position élevée.

Dans le mode de réalisation correspondant à l'assemblage d'une conformation tubulaire 22a ou 23a en U à un flanc 2d ou 3d, l'invention permet de réduire le nombre de pièces en stock en raison du fait que les flancs 2d ou 3d peuvent s'adapter indifféremment à des configurations tubulaires de petite taille 2a, 3a ou à des configurations tubulaires de grande taille 22a ou 23a.

En outre, cette réduction du nombre de pièces est encore améliorée en choisissant des conformations tubulaires 2a et 3a identiques, des conformations tubulaires 22a et 23a identiques, des flans 2d et 3d identiques, des paliers 4 et 5 identiques, une cuve 1 symétrique possédant des bouts d'arbre 6 et 7 identiques et une robinetterie 12 de type standard.

L'invention décrite en référence à un mode réalisation particulier, n'y est nullement limitée, mais couvre au contraire toute modification de forme et toute variante de réalisation dans le cadre et l'esprit de l'invention.

Ainsi, l'invention s'étend également au cas où le levier 13 est monté avec une liberté de rotation autour d'un axe transversal à sa direction longitudinale, l'essentiel étant que le levier 13 de manoeuvre de dimensions réduites coopère avec un moyen d'indexage 16 transversal au dit levier 13, pour indexer et maintenir en position le bac ou la cuve 1 au moins dans la position d'abreuvement (figure 1) et dans la position de nettoyage (figure 2), tout en permettant une indexation dans toute autre position désirée prédéterminée à l'avance, par exemple une troisième position correspondant à une position de protection ou de maintenance du bac ou de la cuve 1.

## Revendications

1. Abreuvoir basculant, du type comportant un bac ou une cuve (1) déplaçable entre une position d'abreuvement et une position de nettoyage au moyen d'un levier (13) de manoeuvre, solidarisé audit bac ou à ladite cuve (1), ledit levier (13) de manoeuvre coopèrant avec un moyen (16) d'indexage transversal audit levier (13), pour indexer et maintenir en position ledit bac (1) ou ladite cuve au moins dans ladite position d'abreuvement et dans la dite position de nettoyage, **caractérisé par le fait que** ledit moyen (16) d'indexage transversal est apte à indexer et maintenir en position ledit bac (1) ou ladite cuve dans au moins une troisième position distincte de ladite position d'abreuvement et de ladite position de nettoyage, une dite troisième position correspondant de préférence à une position de protection ou de maintenance du bac ou de la cuve (1).

2. Abreuvoir basculant selon la revendication 1, **caractérisé par le fait que** ledit levier (13) de manoeuvre est monté avec un degré de liberté sur un support (14) de moyen d'indexage.

3. Abreuvoir selon la revendication 2, **caractérisé par le fait que** ledit levier (13) de manoeuvre est monté avec une liberté de rotation autour de son axe longitudinal.

4. Abreuvoir selon la revendication 2, **caractérisé par le fait que** ledit levier (13) de manoeuvre est monté avec liberté de rotation autour d'un axe transversal à sa direction longitudinale.

5. Abreuvoir selon l'une quelconque des revendications précédentes, **caractérisé par le fait que** le moyen d'indexage (16) est un moyen à rappel élastique, de manière à indexer automatiquement le bac ou la cuve (1) en position sur relâchement du levier (13) de manoeuvre, dès que le moyen d'indexage (16) se trouve en une position prédéterminée.

6. Abreuvoir selon la revendication 5, **caractérisé par le fait que** le moyen d'indexage (16) comporte un axe d'indexage (16) précontraint en position sortie par un ressort (17).

7. Abreuvoir selon l'une quelconque des revendications précédentes **caractérisé par le fait que** le levier (13) de manoeuvre et le moyen (16) d'indexage sont assemblés dans un boîtier (14) d'indexage fixé audit bac ou à ladite cuve (1).

8. Abreuvoir selon la revendication 7, **caractérisé par le fait que** ledit boîtier d'indexage (14) est fixé radialement extérieurement à la robinetterie (12) de manière à décrire un arc de cercle autour de la robinetterie (12) lors du basculement du bac (1) ou de la cuve, ladite robinetterie (12) restant en position fixe solidaire d'un support (2 ou 3) immobile du bac ou de la cuve (1).

9. Abreuvoir selon l'une quelconque des revendications précédentes, **caractérisé par le fait que** l'abreuvoir est constitué de manière démontable par assemblage modulaire de pièces symétriques, en permettant une permutation à droite ou à gauche de ces pièces et de la robinetterie (12).

## Claims

1. Pivotable drinking trough, of the type including a tub or a tank (1) movable between a drinking position and a cleaning position by means of an operating lever (13), made integral with said tub or with said tank (1), said operating lever (13) cooperating with means (16) for indexing transversally to said lever (13), in order to index and maintain in position said tub (1) or said tank at least in said drinking position and in said cleaning position, **characterised in that** said transversal indexing means (16) is capable of indexing and maintaining in position said tub (1) or said tank in at least a third position different from said drinking position and from said cleaning position, said third position corresponding preferably to a position for protecting or for maintaining the tub or the tank (1).

2. Pivotable drinking trough according to claim 1, **characterised in that** said operating lever (13) is mounted with a degree of freedom on a support for the indexing means (14).

3. Drinking trough according to claim 2, **characterised in that** said operating lever (13) is mounted with a freedom of rotation about its longitudinal axis.

4. Drinking trough according to claim 2, **characterised in that** said operating lever (13) is mounted with freedom of rotation about an axis transversal to its longitudinal direction.

5. Drinking trough according to any of the preceding claims, **characterised in that** the indexing means (16) is a springy restoring means, so as to automatically index the tub or the tank (1) in position on releasing the operating lever (13), as soon as the indexing means (16) occupies a predetermined position.

6. Drinking trough according to claim 5, **characterised in that** the indexing means (16) includes a indexing axle (16) pre-tensioned in an advanced position by means of a spring (17).

7. Drinking trough according to any of the preceding claims, **characterised in that** the operating lever (13) and the indexing means (16) are assembled in an indexing casing (14) fixed to said tub or to said tank (1).

8. Drinking trough according to claim 7, **characterised in that** said indexing casing (14) is fixed radially outside the plumbing fixtures (12) so as to describe an arc of a circle around the plumbing fixtures (12) during the tilting of the tub (1) or of the tank, said plumbing fixtures (12) remaining in fixed position made integral with a fixed support (2 or 3) of the tub or of the tank (1).

9. Drinking trough according to any of the preceding claims, **characterised in that** the drinking trough is designed as a knockdown one by modular assembly of symmetrical parts, permitting a permutation to the right or to the left of these parts and of the plumbing fixtures (12).

## Patentansprüche

1. Schwenkbare Tränke, der Art umfassend einen Trog oder eine Mulde (1), der/die zwischen einer Tränkposition und einer Reinigungsposition mit Hilfe eines mit dem besagten Trog oder mit der besagten Mulde (1) fest verbundenen Betätigungshebels (13) verstellbar ist, wobei der besagte Betätigungshebel (13) mit einem Mittel (16) zur Indexierung quer zu dem besagten Hebel (13) zusammenwirkt, um den besagten Trog (1) oder die besagte Mulde zu indexieren und wenigstens in der besagten Tränkposition und in der besagten Reinigungsposition zu halten, **dadurch gekennzeichnet, daß** das besagte Querindexierungsmittel (16) geeignet ist, um den besagten Trog (1) oder die besagte Mulde zu indexieren und in wenigstens einer dritten, sich von der besagten Tränkposition und von der besagten Reinigungsposition unterscheidenden Position zu halten, wobei eine genannte dritte Position vorzugsweise einer Schutz- oder Wartungsposition des Trogs oder der Mulde (1) entspricht.

2. Schwenkbare Tränke nach Anspruch 1, **dadurch gekennzeichnet, daß** der besagte Betätigungshebel (13) mit einem Freiheitsgrad auf einem Träger (14) des Indexierungsmittels montiert ist.

3. Schwenkbare Tränke nach Anspruch 2, **dadurch gekennzeichnet, daß** der besagte Betätigungshebel (13) mit einer Drehungsfreiheit um seine Längsachse montiert ist.

4. Schwenkbare Tränke nach Anspruch 2, **dadurch gekennzeichnet, daß** der besagte Betätigungshebel (13) mit Drehungsfreiheit um eine Achse montiert ist, die zu seiner Längsrichtung senkrecht ist.

5. Schwenkbare Tränke nach irgendeinem der vorgehenden Ansprüche, **dadurch gekennzeichnet, daß** das Befestigungsmittel (16) ein elastisches Rückscellmittel ist, derart, um den Trog oder die Mulde (1) nach Freigabe des Betätigungshebels (13) automatisch in Position zu indexieren, sobald das Indexierungsmittel (16) sich in einer vorbestimmten Position befindet,

6. Schwenkbare Tränke nach Anspruch 5, **dadurch gekennzeichnet, daß** das Indexierungsmittet (16) eine Indexierungsachse (6) umfaßt, die durch eine Feder (17) in ausgefahrener Stellung vorgespannt ist.

7. Schwenkbare Tränke nach irgendeinem der vorgehenden Ansprüche, **dadurch gekennzeichnet, daß** der Betätigungshebel (13) und das Indexierungsmittel (16) in einem Indexierungsgehäuse (14) zusammengebaut sind, das an dem besagten Trog oder an der besagten Mulde (1) befestigt ist.

8. Schwenkbare Tränke nach Anspruch 7, **dadurch gekennzeichnet, daß** das besagte Indexierungsgehäuse (14) radial äußerlich an der Armatur (12) befestigt ist, derart, um beim Verschwenken des Trogs (I) oder der Mulde einen Kreisbogen um die Armatur (12) zu beschreiben, wobei die besagte Armatur (12) in fester Position bleibt, fest verbunden mit einem unbeweglichen Träger (2 oder 3) des Trogs oder der Mulde (1).

9. Schwenkbare Tränke nach irgendeinem der vorgehenden Ansprüche, **dadurch gekennzeichnet, daß** die Tränke zerlegbar durch bausteinartige Zusammensetzung symmetrischer Stücke gebildet ist, indem ein Stellenaustausch rechts oder links dieser Stücke und der Armatur (12) erlaubt wird.
